# EUROPÄISCHE PATENTSCHRIFT

(11) **EP 2 197 925 B1**
(45) Veröffentlichungstag und Bekanntmachung des Hinweises auf die Patenterteilung: **11.05.2011**
(21) Anmeldenummer: 08837528.2
(22) Anmeldetag: 06.10.2008
(51) Int. Cl.: C08F 212/08, C08F 2/24, D21H 19/44, C08L 3/02, C09D 125/14, C09J 125/14, C08F 220/06, C08F 222/02, C08F 236/10

(54) **WÄSSRIGE POLYMERDISPERSIONEN AUF BASIS VON COPOLYMERISATEN AUS VINYLAROMATEN UND KONJUGIERTEN ALIPHATISCHEN DIENEN, VERFAHREN ZU IHRER HERSTELLUNG UND IHRE VERWENDUNG UND PAPIERSTREICHMASSEN**
AQUEOUS POLYMER DISPERSIONS BASED ON COPOLYMERS FORMED FROM VINYLAROMATICS AND CONJUGATED ALIPHATIC DIENES, PROCESSES FOR PREPARATION THEREOF AND USE THEREOF AND PAPER COATING COMPOSITIONS
DISPERSIONS AQUEUSES DE POLYMÈRES À BASE DE COPOLYMÉRISATS D'AROMATES VINYLIQUES ET DE DIÈNES ALPHATIQUES CONJUGUÉS, LEUR PROCÉDÉ DE PRODUCTION ET LEUR UTILISATION ET PATES DE COUCHAGE POUR PAPIER

(30) Priorität: 08.10.2007 EP 07118037
(43) Veröffentlichungstag der Anmeldung: 23.06.2010
(73) Patentinhaber: BASF SE, 67056 Ludwigshafen (DE)
(72) Erfinder: EVSTATIEVA, Elitsa, 68159 Mannheim (DE); SCHMIDT-THÜMMES, Jürgen, 67141 Neuhofen (DE); LAWRENZ, Dirk, 67454 Hassloch (DE); MINDERHOUD, Johannes Jan-Bessel, 67105 Schifferstadt (DE); ARENS, Guillermo, 67227 Frankenthal (DE)
(86) Internationale Anmeldenummer: PCT/EP2008/063353
(87) Internationale Veröffentlichungsnummer: WO 2009/047233

(56) Entgegenhaltungen:
- EP-A- 0 408 099
- WO-A-99/09251
- WO-A-03/091300
- DATABASE WPI Week 199440 Thomson Scientific, London, GB; AN 1994-322219 XP002509187 -& JP 06 248031 A (NIPPON GOSEI GOMU KK) 6. September 1994 (1994-09-06)

## Beschreibung

Die Erfindung betrifft wässrige Polymerdispersionen auf Basis von Copolymerisaten aus Vinylaromaten und konjugierten aliphatischen Dienen, Verfahren zu ihrer Herstellung und ihre Verwendung als Bindemittel für Papierstreichmassen, Klebstoffe, Schlichtemittel für Fasern und zur Herstellung von Überzügen.

Aus der EP-A 0 536 597 sind wässrige Polymerdispersionen bekannt, die erhältlich sind durch radikalische Emulsionspolymerisation von ungesättigten Monomeren in Gegenwart wenigstens eines Stärkeabbauprodukts, das durch Hydrolyse von nativer Stärke oder chemisch modifizierter Stärke in wässriger Phase hergestellt wird und ein gewichtsmittleres Molekulargewicht M_{w} von 2500 bis 25000 aufweist. Als ungesättigte Monomere setzt man beispielsweise Monomermischungen ein, die
- 50 bis 100 Gew.-% Ester der Acrylsäure und/oder Methacrylsäure mit 1 bis 12 C-Atome aufweisenden Alkoholen und/oder Styrol bzw.
- 70 bis 100 Gew.-% Styrol und/oder Butadien

enthalten. Wie aus den Angaben in Tabelle 3 der Anmeldung hervorgeht, haben die dispergierten Polymerteilchen einen mittleren Teilchendurchmesser von 407, 310 bzw. 209 nm. Die Polymerdispersionen werden als Bindemittel, Klebstoff, Schlichtemittel für Fasern oder zur Herstellung von Überzügen verwendet. Papierstreichmassen, die diese Dispersionen als Bindemittel enthalten, zeigen bei der Anwendung auf schnell laufenden Maschinen ein nicht ausreichendes Laufverhalten.

Aus der WO 99/09251 ist ein Stärke-Copolymer-Produkt und ein Verfahren zu seiner Herstellung bekannt. Das Stärke-Copolymer-Produkt ist als Reaktionsprodukt von Stärke und mindestens einem Monomer, das radikalisch polymerisierbar ist, aufzufassen. Es weist eine mittlere Teilchengröße von weniger als 180 nm auf. Um wässrige Dispersionen solcher Produkte herzustellen, verwendet man eine wässrige Lösung oder Dispersion einer abgebauten Stärke, die in wässriger Lösung bei einer Temperatur von 25°C eine intrinsische Viskosität η von 0,07 bis 0,35 dl/g hat. Die Polymerisation wird so geführt, dass man zu der auf Polymerisationstemperatur erwärmten wässrigen Lösung oder Dispersion der abgebauten Stärke zunächst einen Teil der Monomeren und des radikalischen Initiators zugibt und nach dem Anspringen der Polymerisation weitere Portionen an Monomeren und Initiator dosiert, wobei wenigstens 75% der gesamten Monomeren nach mehr als einer Stunde nach dem Initiieren der Polymerisation zugegeben werden. Die Dispersionen werden zur Herstellung von Überzügen und als Binder für Papierprodukte verwendet. Die Bindekraft solcher Produkte ist jedoch nicht ausreichend.

Aus der WO 03/091300 sind wässrige Polymerdispersionen bekannt, die erhältlich sind durch radikalisch initiierte Copolymerisation von (a) 0,1 bis 99,9 Gew.-% Styrol und/oder Methylstyrol, (b) 0.1 bis 99,9 Gew.% Butadien-1,3 und/oder Isopren und (c) 0 bis 40 Gew.-% anderen ethylenisch ungesättigte Monomeren, wobei die Summe der Monomeren (a), (b) und (c) immer 100 beträgt, in Gegenwart von 10 bis 40 Gew.-%, bezogen auf die eingesetzten Monomeren, mindestens einer abgebauten Stärke mit einem Molgewicht Mₙ von 500 bis 40 000 und von wasserlöslichen Redoxkatalysatoren. Diese Polymerdispersionen werden als Masse- und Oberflächenleimungsmittel für Papier, Pappe und Karton verwendet. Da sie eine schlechte Bindekraft haben, sind sie beispielsweise nicht als Bindemittel in Papierstreichmassen geeignet.

In der EP 408099 wird die Copolymerisation von Styrol, Butadien und Säuren wie z.B. Acryl- oder Itaconsäure in Gegenwart von verschiedenen Dextrinen beschrieben. Die Polymerisatteilchen haben eine Größe von mindestens 179 nm. In der JP 06-248031 wird ein Copolymerlatex beschrieben, der hergestellt wird durch Emulsionspolymerisation von konjugierten Dienen, aromatischen Vinylverbindungen, ethylenisch ungesättigten Carbonsäuren und optional weiteren Monomeren in Gegenwart von Stärke. Die Polymerpartikel haben eine durchschnittliche Größe von 300 bis 2000 Angström.

Der Erfindung liegt die Aufgabe zugrunde, weitere wässrige Polymerdispersionen auf Basis von in Gegenwart von abgebauter Stärke hergestellten Copolymerisaten aus Vinylaromaten und konjugierten aliphatischen Dienen zur Verfügung zu stellen, wobei die Dispersionen gegenüber den bekannten Produkten eine höhere Bindekraft und bei Einsatz in Papierstreichmassen ein gutes Laufverhalten auf schnell laufenden Maschinen gewährleisten sollen. Die wässrigen Polymerdispersionen sollen außerdem praktisch kein Koagulat enthalten.

Die Aufgabe wird erfindungsgemäß gelöst mit wässrigen Polymerdispersionen auf Basis von Copolymerisaten aus Vinylaromaten und konjugierten aliphatischen Dienen, wenn sie eine mittlere Teilchengröße von 80 bis 150 nm aufweisen und erhältlich sind durch radikalisch initiierte Emulsionscopolymerisation von
(a) 19,9 bis 80 Gew.-Teilen mindestens einer vinylaromatischen Verbindung,
(b) 19,9 bis 80 Gew.-Teilen mindestens eines konjugierten aliphatischen Diens,
(c) 0,1 bis 10 Gew.-Teilen mindestens einer ethylenisch ungesättigten Säure und
(d) 0 bis 20 Gew.-Teilen mindestens eines anderen monoethylenisch ungesättigten Monomeren,
wobei die Summe der Gew.-Teile der Monomeren (a), (b), (c) und (d) immer 100 beträgt,
in wässrigem Medium in Gegenwart mindestens einer abgebauten Stärke mit einer intrinsischen Viskosität ηᵢ von weniger als 0,07 dl/g unter Verwendung von mindestens 0,9 Gew.-%, bezogen auf die insgesamt eingesetzten Monomeren, an Initiatoren ausgewählt unter Peroxodisulfaten, Peroxosulfaten, Azoinitiatoren, organischen Peroxiden, organischen Hydroperoxiden und Wasserstoffperoxid, wobei mindestens 30 Gew.-% der Initiatoren zusammen mit der abgebauten Stärke in dem wässrigen Medium vorgelegt und die Monomeren sowie die restlichen Initiatoren unter Polymerisationsbedingungen in diese Vorlage dosiert werden.

Bevorzugte wässrige Polymerdispersionen sind erhältlich wenn man bei der radikalisch initiierten Emulsionscopolymerisation 3 bis 10 Gew.-% der insgesamt zu polymerisierenden Monomeren in dem wässrigen Medium vorlegt und/oder bei der Emulsionscopolymerisation eine abgebaute native Stärke mit einer intrinsischen Viskosität ηᵢ von 0,02 bis 0,06 dl/g einsetzt.

Die wässrigen Polymerdispersionen sind beispielsweise dadurch erhältlich, dass man bei der Emulsionscopolymerisation Monomermischungen aus
(a) 19,9 bis 80 Gew.-Teile Styrol und/oder Methylstyrol,
(b) 19,9 bis 80 Gew.-Teile Butadien-1,3 und/oder Isopren,
(c) 0,1 bis 10 Gew.-Teile mindestens einer ethylenisch ungesättigten Säure und
(d) 0 bis 20 Gew.-Teilen mindestens eines anderen monoethylenisch ungesättigten Monomeren,
wobei die Summe der Gew.-Teile der Monomeren (a), (b), (c) und (d) immer 100 beträgt,
einsetzt. Bevorzugt in Betracht kommende wässrige Polymerdispersionen sind erhältlich, wenn bei der Emulsionscopolymerisation
(a) 25 bis 70 Gew.-Teile Styrol und/oder Methylstyrol,
(b) 25 bis 70 Gew.-Teile Butadien-1,3 und/oder Isopren,
(c) 0,1 bis 10 Gew.-Teile mindestens einer ethylenisch ungesättigten Säure und
(d) 0 bis 20 Gew.-Teilen mindestens eines anderen monoethylenisch ungesättigten Monomeren,
wobei die Summe der Gew.-Teile der Monomeren (a), (b), (c) und (d) immer 100 beträgt,
eingesetzt werden.

Bei der Emulsionscopolymerisation werden beispielsweise 15 bis 60 Gew.-Teile einer abgebauten Stärke auf 100 Gew.-Teile der Monomeren verwendet.

Als Monomere der Gruppe (a) kommen vinylaromatische Verbindungen in Betracht, z. B. Styrol, α-Methylstyrol und/oder Vinyltoluol. Aus dieser Gruppe von Monomeren wird vorzugsweise Styrol verwendet. 100 Gew.-Teile der bei der Polymerisation insgesamt eingesetzten Monomermischungen enthalten beispielsweise 19,9 bis 80 Gew.-Teile und vorzugsweise 25 bis 70 Gew.-Teile mindestens eines Monomers der Gruppe (a).

Monomere der Gruppe (b) sind beispielsweise Butadien-1,3, Isopren, Pentadien-1,3, Dimethylbutadien-1,3 und Cyclopentadien. Aus dieser Gruppe von Monomeren setzt man vorzugsweise Butadien-1,3 und/oder Isopren ein. 100 Gew.-Teile der Monomermischungen, die bei der Emulsionspolymerisation insgesamt eingesetzt werden, enthalten beispielsweise 19,9 bis 80 Gew.-Teile, vorzugsweise 25 bis 70 Gew.-Teile und insbesondere 25 bis 60 Gew.-Teile mindestnes eines Monomers der Gruppe (b).

Monomere der Gruppe (c) sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende α,β-monoethylenisch ungesättigte Mono- und Dicarbonsäuren eingesetzt. Beispiele hierfür sind Acrylsäure, Methacrylsäure, Maleinsäure, Fumarsäure, Crotonsäure, Vinylessigsäure und Vinylmilchsäure. Als ethylenisch ungesättigte Sulfonsäuren eignen sich beispielswiese Vinylsulfonsäure, Styrolsulfonsäure, Acrylamidomethylpropansulfonsäure, Sulfopropylacrylat und Sulfopropylmethacrylat.

Die Säuregruppen enthaltenden Monomeren der Gruppe (c) können in Form der freien Säuren sowie in partiell oder vollständig mit Alkalilaugen oder mit Ammoniak oder mit einer Ammoniumbase neutralisierten Form bei der Polymerisation eingesetzt werden. Vorzugsweise verwendet man Natronlauge, Kalilauge oder Ammoniak als Neutralisationsmittel. 100 Gew.-Teile der Monomermischungen, die bei der Emulsionspolymerisation eingesetzt werden, enthalten beispielsweise 0,1 bis 10 Gew.-Teile, vorzugsweise 0,1 bis 8 Gew.-Teile und meistens 1 bis 5 Gew.-Teile mindestens eines Monomers der Gruppe (c).

Als Monomere der Gruppe (d) kommen andere monoethylenisch ungesättigte Verbindungen in Betracht. Beispiele hierfür sind ethylenisch ungesättigte Carbonsäurenitrile wie insbesondere Acrylnitril und Methacrylnitril, ethylenisch ungesättigte Carbonsäureamide wie insbesondere Acrylamid und Methacrylamid, Vinylester von gesättigten C₁- bis C₁₈-Carbonsäuren, vorzugsweise Vinylacetat, sowie Ester der Acrylsäure und der Methacrylsäure mit einwertigen C₁- bis C₁₈-Alkoholen wie Methylacrylat, Methylmethacrylat, Ethylacrylat, Ethylmethacrylat, n-Propylacrylat, n-Propylmethacrlat, Isopropylacrylat, Isopropylmethacrylat, n-Butylcrylat, n-Butylmethacrylat, Isobutylacrylat, Isobutylmethacrylat, sec.-Butylacrylat. sec.-Butylmethacrylat, tert.-Butylacrylat, tert.-Butylmethacrylat, Pentylacrylate, Pentylmethacrylate, 2-Ethylhexylacrylat, 2-Ethylhexylmethacrylat, Allylester gesättigter Carbonsäuren, Vinylether, Vinylketone, Dialkylester ethylenisch ungesättigter Carbonsäuren, N-Vinylpyrrolidon, N-Vinylpyrrolidin, N-Vinylformamid, N,N-Dialkylamonialkylacrylamide, N,N-Dialkylaminoalkylmethacrylamide, N,N-Dialkylaminoalkylacrylate, N,N-Dialkylaminoalkylmethacrylate, Vinylchlorid und Vinylidenchlorid. Diese Gruppe von Monomeren wird gegebenenfalls zur Modifizierung der Polymeren eingesetzt. 100 Gew.-Teile der bei der Emulsionspolymerisation eingesetzten Monomermischungen enthalten beispielsweise 0 bis 20 Gew.-Teile, meistens 0 bis 15 Gew.-Teile und insbesondere 0 bis 10 Gew.-Teile mindestens eines Monomers der Gruppe (d).

Bei der Emulsionscopolymerisation setzt man z. B. 15 bis 60 Gew.-Teile einer abgebauten Stärke auf 100 Gew.-Teile der Monomeren ein. Als Ausgangstärken zur Herstellung der erfindungsgemäß zu verwendenden abgebauten Stärken eignen sich alle nativen Stärken wie Stärken aus Mais, Weizen, Hafer, Gerste, Reis, Hirse, Kartoffeln, Erbsen, Tapioka, Sorghum oder Sago. Von Interesse sind außerdem solche natürlichen Stärken, die einen hohen Amylopektingehalt aufweisen wie Wachsmaisstärke und Wachskartoffelstärke. Der Amylopektingehalt dieser Stärken liegt oberhalb von 90 %, meistens bei 95 bis 100 %. Auch chemisch durch Veretherung oder Veresterung modifizierte Stärken können zur Herstellung der erfindungsgemäßen Polymerdispersionen eingesetzt werden. Solche Produkte sind bekannt und im Handel erhältlich. Sie werden beispielsweise durch Veresterung von nativer Stärke oder abgebauter nativer Stärke mit anorganischen oder organischen Säuren, deren Anhydriden oder Chloriden hergestellt. Von besonderem Interesse sind phosphatierte und acetylierte abgebaute Stärken. Die gängigste Methode zur Veretherung von Stärken besteht in der Behandlung von Stärke mit organischen Halogenverbindungen, Epoxiden oder Sulfaten in wässriger alkalischer Lösung. Bekannte Stärkeether sind Alkylether, Hydroxyalkylether, Carboxyalkylether und Allylether. Außerdem eignen sich die Umsetzungsprodukte von Stärken mit 2,3-Epoxipropyltrimethylammoniumchlorid. Besonders bevorzugt sind abgebaute native Stärken, insbesondere zu Maltodextrin abgebaute native Stärken.

Der Abbau der Stärken kann enzymatisch, oxidativ oder hydrolytisch durch Einwirkung von Säuren oder Basen erfolgen. Abgebaute Stärken sind im Handel erhältlich. Man kann jedoch auch eine natürliche Stärke beispielsweise zunächst enzymatisch in wässrigem Medium abbauen und nach dem Abstoppen des enzymatischen Abbaus in der so erhaltenen wässrigen Lösung bzw. Dispersion der abgebauten Stärke die Emulsionspolymerisation der Monomeren erfindungsgemäß durchführen. Die abgebauten Stärken haben beispielsweise eine intrinsische Viskosität ηᵢ < 0,07 dl/g, vorzugsweise < 0,05 dl/g. Die intrinsische Viskosität ηᵢ der abgebauten Stärken liegt meistens in dem Bereich von 0,02 bis 0,06 dl/g. Die intrinsische Viskosität ηᵢ wird bestimmt gemäß DIN EN1628 bei einer Temperatur von 23 °C.

Die bei der Emulsionspolymerisation eingesetzten Mengen an abgebauter Stärke betragen vorzugsweise 20 bis 50 Gew.-Teile, insbesondere 30 bis 45 Gew.-Teile, bezogen auf 100 Gew.-Teile der zu polymerisierenden Monomeren.

Gegenstand der Erfindung ist außerdem ein Verfahren zur Herstellung von wässrigen Polymerdispersionen auf Basis von Copolymerisaten aus Vinylaromaten und konjugierten aliphatischen Dienen durch Copolymerisation der Monomeren in wässrigem Medium in Gegenwart einer abgebauten Stärke und von Radikale bildenden Initiatoren, wobei man bei der radikalisch initiierten Emulsionscopolymerisation
(a) 19,9 bis 80 Gew.-Teilen mindestens einer vinylaromatischen Verbindung,
(b) 19,9 bis 80 Gew.-Teilen mindestens eines konjugierten aliphatischen Diens,
(c) 0,1 bis 10 Gew.-Teilen mindestens einer ethylenisch ungesättigten Säure und
(d) 0 bis 20 Gew.-Teilen mindestens eines anderen monoethylenisch ungesättigten Monomeren,
wobei die Summe der Gew.-Teile der Monomeren (a), (b), (c) und (d) immer 100 beträgt,
einsetzt, eine abgebaute Stärke mit einer intrinsischen Viskosität ηᵢ von weniger als 0,07 dl/g verwendet und mindestens 0,9 Gew.-%, bezogen auf die insgesamt eingesetzten Monomeren, an Initiatoren ausgewählt unter Peroxodisulfaten, Peroxosulfaten, Azoinitiatoren, organischen Peroxiden, organischen Hydroperoxiden und Wasserstoffperoxid einsetzt, wobei mindestens 30 Gew.-% der Initiatoren zusammen mit der abgebauten Stärke in dem wässrigen Medium vorgelegt und die Monomeren sowie die restlichen Initiatoren unter Polymerisationsbedingungen in diese Vorlage dosiert werden.

In einer bevorzugten Ausführungsform des erfindungsgemäßen Verfahrens legt man zusammen mit der wässrigen Lösung oder Dispersion der abgebauten Stärke und mindestens 30 Gew.-% des Initiators 3 bis 10 Gew.-% der insgesamt zu polymerisierenden Monomeren in dem wässrigen Medium vor. Die restlichen Monomeren und der restliche Initiator werden dann nach dem Anspringen der Polymerisation unter Polymerisationsbedingungen, jedoch getrennt voneinander, zur Vorlage dosiert. Bei der Emulsionspolymerisation wird meistens eine abgebaute native Stärke mit einer intrinsischen Viskosität ηᵢ von 0,02 bis 0,06 dl/g eingesetzt. Unter Polymersationsbedingungen soll verstanden werden, dass das Reaktionsgemisch in der Vorlage auf die erforderliche Temperatur erhitzt worden ist, bei der die Polymerisation abläuft. Diese Temperaturen betragen beispielsweise 80 bis 130°C, vorzugsweise 90 bis 120°C. Die Polymerisation wird vorzugsweise unter Druck durchgeführt, z.B. bei Drücken bis zu 15 bar, meistens bei 2 bis 10 bar.

Vorzugsweise setzt man bei der Emulsionscopolymerisation
(a) 19,9 bis 80 Gew.-Teile Styrol und/oder Methylstyrol,
(b) 19,9 bis 80 Gew.-Teile Butadien-1,3 und/oder Isopren,
(c) 0,1 bis 10 Gew.-Teile mindestens einer ethylenisch ungesättigten Säure und
(d) 0 bis 20 Gew.-Teilen mindestens eines anderen monoethylenisch ungesättigten Monomeren, wobei die Summe der Gew.-Teile der Monomeren (a), (b), (c) und (d) immer 100 beträgt,
ein.

Meistens enthält das bei der Emulsionscopolymerisation eingesetzte Monomergemisch
(a) 25 bis 70 Gew.-Teile Styrol und/oder Methylstyrol,
(b) 25 bis 70 Gew.-Teile Butadien-1,3 und/oder Isopren,
(c) 0,1 bis 10 Gew.-Teile mindestens einer ethylenisch ungesättigten Säure und
(d) 0 bis 20 Gew.-Teilen mindestens eines anderen monoethylenisch ungesättigten Monomeren,
wobei die Summe der Gew.-Teile der Monomeren (a), (b), (c) und (d) immer 100 beträgt.

Bei der Emulsionscopolymerisation verwendet man vorzugsweise als Komponente (c) der Monomermischungen Acrylsäure, Methacrylsäure, Itaconsäure, Maleinsäure, Crotonsäure, Vinylsulfonsäure, Acrylamidomethylpropansulfonsäure, Vinylphosphonsäure, Alkali- oder Ammoniumsalze dieser Säuren sowie Mischungen der Säuren und/oder Salze. Die Säuren können jedoch auch in teilneutralisierter Form eingesetzt werden.

Bei dem erfindungsgemäßen Verfahren verwendet man mindestens 0,9 Gew.-%, bezogen auf die insgesamt zu polymerisierenden Monomeren, mindestens eines Initiators aus der Gruppe der Peroxodisulfate, Peroxosulfate, Azoinitiatoren, organischen Peroxide, organischen Hydroperoxide und Wasserstoffperoxid, wobei mindestens 30 Gew.-% der Initiatoren zusammen mit der abgebauten Stärke in dem wässrigen Medium vorgelegt und die Monomeren sowie die restlichen Initiatoren unter Polymerisationsbedingungen in diese Vorlage dosiert werden. Bevorzugt werden wasserlösliche Initiatoren eingesetzt, z. B. Natriumpersulfat, Kaliumpersulfat, Ammoniumpersulfat, Natriumperoxodisulfat, Kaliumperoxodisulfat und/oder Ammoniumperoxodisulfat.

Beispiele für weitere geeignete Initiatoren sind Dibenzoylperoxid, tert.-Butylperpivalat, tert.-Butyl-per-2-ethylhexanoat, Di-tert.-butylperoxid, Diamylperoxid, Dioctanoylperoxid, Didecanoylperoxid, Dilauroylperoxid, Bis(o-toluyl)peroxid, Succinylperoxid, tert.-Butalperacetat, tert.-Butylpermaleinat, tert.-Butylperisobutyrat, tert.-Butylperpivalat, tert.-Butylperoctoat, tert.-Butylperbnezoat, tert.-Butylhydroperoxid, Wasserstoffperoxid, Azo-bis-isobutyronitril, 2,2'-Azo-bis-(2-methylbutyronitril), 2,2'-Azobis(2,4-dimethylvaleronitril), 2,2'-Azobis(N,N'-dimethylenisobutyroamidin)dihydrochlorid und Azobis(2-amidinopropan)dihydrochlorid. Die Initiatoren werden beispielsweise in Mengen bis zu 2,0 Gew.-%, bezogen auf die zu polymerisierenden Monomeren eingesetzt. Meistens verwendet man die Initiatoren in Mengen von 1,0 bis 1,5 Gew.-%, bezogen auf die Monomeren.

Um die erfindungsgemäßen Polymerdispersionen herzustellen, legt man beispielsweise in einem beheizbaren Reaktor, der mit einer Mischvorrichtung ausgestattet ist, eine wässrige Lösung der oben beschriebenen abgebauten Stärke und mindestens 30 Gew.-% der insgesamt benötigten Initiatormenge vor. Die Menge an Initiator in der Vorlage beträgt höchstens 90 Gew.-%, meistens nicht mehr als 60 Gew.-% der insgesamt zum Polymerisieren der Monomeren erforderlichen Menge. Die abgebaute Stärke bewirkt eine gute Dispergierung der Monomeren und eine Stabilisierung der entstehenden feinteiligen Polymeren. Bei der Emulsionspolymerisation erfolgt zumindest eine teilweise Pfropfung der abgebauten Stärke, die dadurch fest in das entstehende Polymer eingebaut wird.

Um die Dispergierung der Monomeren in dem wässrigen Medium zu unterstützen, kann man die üblicherweise als Dispergiermittel eingesetzten Schutzkolloide und/oder Emulgatoren verwenden. Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420. Als Emulgatoren kommen grenzflächenaktive Stoffe in Betracht, deren Molmasse M_{w} meistens unterhalb von 2000 liegt, während die Molmasse M_{w} der Schutzkolloide bis zu 50000 betragen kann.

Geeignete Emulgatoren sind beispielsweise ethoxylierte C₈- bis C₃₆-Fettalkohole mit einem Ethoxylierungsgrad von 3 bis 50, ethoxylierte Mono-, Di- und Tri- C₄- bis C₁₂-Alkylphenole mit einem Ethoxylierungsgrad von 3 bis 50, Alkalimetallsalze von Dialkylestern der Sulfobernsteinsäure, Alkalimetall- und Ammoniumsalze von C₈- bis C₁₂-Alkylsulfaten, Alkalimetall- und Ammoniumsalze von C₁₂- bis C₁₈-Alkylsulfonsäuren und Alkalimetall- und Ammoniumsalze von C₉- bis C₁₈-Alkylarylsulfonsäuren. Falls Emulgatoren und/oder Schutzkolloide als Hilfsmittel zum Dispergieren der Monomeren mitverwendet werden, betragen die davon verwendeten Mengen beispielsweise 0,1 bis 5 Gew.-%, bezogen auf die Monomeren.

Die Vorlage kann außerdem noch eine Polystyrolsaat enthalten, d.h. eine wässrige Dispersion von feinteiligem Polystyrol mit einem Teilchendurchmesser von 20 bis 40 nm.

Um die Eigenschaften der Polymeren zu modifizieren, kann man die Emulsionspolymerisation gegebenenfalls in Gegenwart mindestens eines Polymerisationsreglers durchführen. Beispiele für Polymerisationsregler sind organische Verbindungen, die Schwefel in gebundener Form enthalten wie Dodecylmercaptan, Thiodiglykol, Ethylthioethanol, Di-n-butylsulfid, Di-n-octylsulfid, Diphenylsulfid, Düsopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff. Weitere Polymerisationsregler sind Aldehyde wie Formaldehyd, Acetaldehyd und Propionaldehyd, organische Säuren wie Ameisensäure, Natriumformiat oder Ammoniumformiat, Alkohole wie insbesondere Isopropanol sowie Phosphorverbindungen wie Natriumhypophosphit. Falls man bei der Polymerisation einen Regler einsetzt, so beträgt die jeweils verwendete Menge beispielsweise 0,01 bis 5, vorzugsweise 0,1 bis 1 Gew.-%, bezogen auf die bei der Polymerisation eingesetzten Monomeren. Die Regler werden vorzugsweise zusammen mit den Monomeren in die Vorlage dosiert. Sie können jedoch auch teilweise oder vollständig in der Vorlage anwesend sein.

Die Emulsionspolymerisation erfolgt in einem wässrigen Medium. Hierbei kann es sich z.B. um vollständig entsalztes Wasser handeln oder auch um Mischungen aus Wasser und einem damit mischbaren Lösemittel wie Methanol, Ethanol oder Tetrahydrofuran. Um die Monomeren zu polymerisieren, bereitet man zunächst eine wässrige Lösung der abgebauten Stärke. Diese Lösung kann gegebenenfalls ein Schutzkolloid und/oder einen Emulgator in gelöster Form sowie gegebenenfalls eine Polystyrolsaat enthalten. Die als Vorlage benutzte wässrige Lösung wird vorzugsweise auf die Temperatur erhitzt, bei der die Polymerisation der Monomeren erfolgen soll oder auf eine Temperatur, die beispielsweise 5 bis 20°C unterhalb der Polymerisationstemperatur liegt, bevor mindestens 30 % der insgesamt erforderlichen Initiatormenge in die Vorlage gegeben wird. Sobald die jeweils gewünschte Polymerisationstemperatur erreicht ist oder innerhalb einer Zeitspanne von 1 bis 15 Minuten, vorzugsweise 5 bis 15 Minuten nach dem Erreichen der Polymerisationstemperatur beginnt man mit dem Dosieren der Monomeren. Sie können beispielsweise kontinuierlich innerhalb von beispielsweise 60 Minuten bis zu 10 Stunden, meistens innerhalb von 2 bis 4 Stunden in den Reaktor gepumpt werden. Auch eine stufenweise erfolgende Zugabe der Monomeren ist möglich.

In einer bevorzugten Ausführungsform des erfindungsgemäßen Verfahrens legt man 3 bis 10 Gew.-% der insgesamt zu polymerisierenden Monomeren im Reaktor zusammen mit den vorstehend genannten Bestandteilen vor und erhitzt dann den Reaktorinhalt auf die Polymerisationstemperatur, wobei man mindestens 30 Gew.-% der Initiatormenge vorzugsweise kurz vor Erreichen der Polymerisationstemperatur wie oben beschrieben zusetzt und dann die restlichen Monomeren wie oben angegeben dosiert. Nach Abschluss der Polymerisation kann man gegebenenfalls weiteren Initiator zum Reaktionsgemisch zugeben und eine Nachpolymerisation bei gleicher, niedrigerer oder auch höherer Temperatur wie bei der Hauptpolymerisation durchführen. Um die Polymerisationsreaktion zu vervollständigen reicht es in den meisten Fällen, das Reaktionsgemisch nach Zugabe sämtlicher Monomeren noch beispielsweise 1 bis 3 Stunden bei der Polymerisationstemperatur zu rühren.

Der pH-Wert kann bei der Polymerisation beispielsweise 1 bis 5 betragen. Nach der Polymerisation wird der pH-Wert beispielsweise auf einen Wert zwischen 6 und 7 eingestellt. Man erhält praktisch koagulatfreie wässrige Dispersionen. Die Menge an Koagulat liegt im ppm-Bereich und beträgt, wie die Beispiele zeigen, 8 bis 25 ppm.

Man erhält eine wässrige Polymerdispersion, deren dispergierte Teilchen einen mittleren Teilchendurchmesser von 80 bis 150 nm aufweisen. Der mittlere Teilchendurchmesser der Polymerteilchen wurde durch dynamische Lichtstreuung an einer 0,005 bis 0,01 gew.-%igen wässrigen Polymerdispersion bei 23°C mit Hilfe eines Autosizers IIC der Fa. Malvern Instruments, England, ermittelt. Die Angaben beziehen sich jeweils auf den mittleren Durchmesser der Kumulantenauswertung (cumulant z-average) der gemessenen Autokorrelationsfunktion gemäß IOS-Norm 13321.

In einer Ausführungsform beträgt der Feststoffgehalt der erfindungsgemäßen wässrigen Polymerdispersion mehr als 55 Gew.% z.B. mindestens 60 Gew.%. Ein entsprechend hoher Feststoffgehalt kann z.B. durch entsprechende Einstellung der bei der Emulsionspolymerisation eingesetzten Wassermenge und/oder der Monomerenmengen erfolgen.

In einer Ausführungsform erfolgt die Emulsionscopolymerisation emulgatorfrei und/oder ohne Verwendung von Polymersaat.

Die erfindungsgemäßen wässrigen Polymerdispersionen werden als Bindemittel, Klebstoff, Schlichtemittel für Fasern oder zur Herstellung von Überzügen verwendet. Bevorzugt werden sie als Bindemittel in Papierstreichmassen eingesetzt. Papierstreichmassen enthalten üblicherweise mindestens ein Pigment, das in Wasser dispergiert ist, und ein organisches Bindemittel z.B. eine Polymerdispersion auf Basis eines carboxylierten Styrol-Acrylat-Copolymeren (Acronal® S 728 der BASF Aktiengesellschaft, Ludwigshafen). Auf 100 Gew.-Teile eines anorganischen Pigments verwendet beispielsweise 5 bis 25 Gew.-Teile eines organischen Bindemittels. Papiere, die mit Papierstreichmassen beschichtet wurden, die die erfindungsgemäßen wässrigen Polymerdispersionen als Bindemittel enthalten, haben eine sehr hohe Rupffestigkeit. Die erfindungsgemäßen Dispersionen verleihen den Papiersteichmassen eine höhere Bindekraft als nächstvergleichbare bekannte Polymerdispersionen, vgl. Vergleichsbeispiel 1.

Die erfindungsgemäßen wässrigen Polymerdispersionen können außerdem als Schlichtemittel eingesetzt werden. Sie eignen sich sowohl zum Schlichten von Textilfasern und auch zum Schlichten von Mineralfasern, insbesondere Glasfasern. Aufgrund ihrer guten Klebkraft kann man sie außerdem als Klebstoff und zur Herstellung von Überzügen verwenden.

### Beispiele

Sofern sich aus dem Zusammenhang nichts anderes ergibt, bedeuten die Angaben in Prozent immer Gewichtsprozent.

Die Feststoffgehalte wurden bestimmt, indem eine definierte Menge der jeweiligen wässrigen Copolymerisatdispersion (ca. 5 g) bei 140 °C in einem Trockenschrank bis zur Gewichtskonstanz getrocknet wurde. Es wurden jeweils zwei separate Messungen durchgeführt. Die in den Beispielen angegebenen Werte stellen den Mittelwert dieser beiden Messergebnisse dar.

Die Bestimmung der Glasübergangstemperatur erfolgte gemäß DIN 53765 mittels eines DSC820-Geräts, Serie TA8000 der Fa. Mettler-Toledo Int. Inc.

Die Menge an Koagulat in der Dispersion bezieht sich auf Teilchen, deren Durchmesser >45 µm ist. Sie wurde bestimmt, indem man die fertige Dispersion durch ein Sieb mit bekanntem Porendurchmesser filtrierte.

Die mittleren Teilchendurchmesser der Polymerteilchen wurden durch dynamische Lichtstreuung an einer 0,005 bis 0,01 gew.-%igen wässrigen Polymerdispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

Die intrinsische Viskosität ηᵢ wurde gemäß DIN EN.1628 bei einer Temperatur von 23 °C bestimmt.

In den Beispielen wurden folgende Einsatzstoffe verwendet:
- Emulgator A:: Arylsulfonat (Disponil® LDPS 20 der Fa. Cognis)
- Abgebaute Stärke A:: handelsübliches 67%iges wässriges Maltodextrin mit einer intrinsischen Viskosität ηᵢ von 0,052 dl/g

### Beispiel 1

In einem 6 L Druckreaktor, ausgerüstet mit einem MIG-Rührer und 3 Dosiereinrichtungen, wurden bei Raumtemperatur und unter Stickstoffatmosphäre 710 g entionisiertes Wasser, 41 g einer 33 gew.-%igen wässrigen Polystyrolsaat (Partikelgröße 30 nm), 16 Gewichtsteile Emulgator A und 806 g der abgebauten Stärke A vorgelegt. Anschließend wurde der Reaktorinhalt unter Rühren (180 Upm) auf 90 °C aufgeheizt. Sobald eine Temperatur von 85 °C erreicht war, wurden 129 g einer 7 gew.-%igen wässrigen Natriumpersulfat-Lösung zugegeben. Nach 10 Minuten wurden zeitgleich beginnend die Gesamtmenge an Zulauf 1 A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 gew.-%igen wässrigen Na-OH auf einen pH-Wert von 6,5 ein und entspannte den Druckbehälter auf Atmosphärendruck. Das gebildete Koagulat wurde von der Dispersion durch Filtration über ein Sieb (Maschenweite 100 Mikrometer) abgetrennt.

| Zulauf 1A | |
|---|---|
| homogene Mischung aus | |
| 664 g | entionisiertem Wasser |
| 12 g | einer 15 gew.-%igen wässrigen Natriumdodecylsulfat-Lösung |
| 72 g | Acrylsäure |
| 9 g | Itaconsäure |
| | |

| Zulauf 1B | |
|---|---|
| homogene Mischung aus | |
| 1026 g | Styrol |
| 21 g | tertiär-Dodecylmercaptan |
| 793 g | Butadien |
| | |

| Zulauf 2 | |
|---|---|
| 360 g | einer 3,5 gew.-%igen wässrigen Natriumpersulfat-Lösung |

Die erhaltene wässrige Dispersion (D1) hatte einen Feststoffgehalt von 52 Gew.-%, bezogen auf das Gesamtgewicht der wässrigen Dispersion und enthielt 23 ppm Koagulat. Die Glasübergangstemperatur des Polymeren wurde zu 10 °C und die Teilchengröße zu 141 nm bestimmt.

### Beispiel 2

In einem 6 L Druckreaktor, ausgerüstet mit einem MIG-Rührer und 3 Dosiereinrichtungen, wurden bei Raumtemperatur und unter Stickstoffatmosphäre 712 g entionisiertes Wasser, 41 g einer 33 gew.-%igen wässrigen Polystyrolsaat (Partikelgröße 30 nm, mit 16 Gewichtsteilen Emulgator Disponil® LDPS 20 der Fa. Cognis) und 806 g eines 67 gew.-%igen Maltodextrins (Roclys C1967S, Roquette) und jeweils 5 Gew.-% der Zuläufe 1A und 1 B vorgelegt. Anschließend wurde der Reaktorinhalt unter Rühren (180 Upm) auf 90 °C aufgeheizt, und bei Erreichen von 85 °C wurden 128 g einer 7 gew.-%igen wässrigen Natriumpersulfat-Lösung zugegeben. Nach 10 Minuten wurden zeitgleich beginnend die Gesamtmenge an Zulauf 1 A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 gew.-%igen wässrigen NaOH auf einen pH-Wert von 6,5 ein und entspannte den Druckbehälter auf Atmosphärendruck.

| Zulauf 1A | |
|---|---|
| homogene Mischung aus | |
| 664 g | entionisiertes Wasser |
| 12 g | einer 15 gew.-%igen wässrigen Natriumdodecylsulfat-Lösung |
| 72 g | Acrylsäure |
| 9 g | Itaconsäure |
| | |

| Zulauf 1B | |
|---|---|
| homogene Mischung aus | |
| 1026 g | Styrol |
| 22 g | tertiär-Dodecylmercaptan |
| 793 g | Butadien |
| | |

| Zulauf 2 | |
|---|---|
| 360 g | einer 3,5 gew.-%igen wässrigen Natriumpersulfat-Lösung |

Die erhaltene wässrige Dispersion (D2) wies einen Feststoffgehalt von 51 Gew.-%, bezogen auf das Gesamtgewicht der wässrigen Dispersion, auf und enthielt 13 ppm Koagulat. Die Glasübergangstemperatur wurde zu 11 °C und die Teilchengröße zu 126 nm bestimmt.

### Beispiel 3

In einem 6 L Druckreaktor, ausgerüstet mit einem MIG-Rührer und 3 Dosiereinrichtungen wurden bei Raumtemperatur und unter Stickstoffatmosphäre 712 g entionisiertes Wasser, 806 g der abgebauten Stärke A und jeweils 5 Gew.-% der Zuläufe 1 A und 1 B vorgelegt. Anschließend wurde der Reaktorinhalt unter Rühren (180 Upm) auf 90 °C aufgeheizt, und bei Erreichen von 85 °C wurden 129 g einer 7 gew.-%igen wässrigen Natriumpersulfat-Lösung zugegeben. Nach 10 Minuten wurden zeitgleich beginnend die Gesamtmenge an Zulauf 1 A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 gew.-%igen wässrigen Na-OH auf einen pH-Wert von 6,5 ein und entspannte den Druckbehälter auf Atmosphärendruck.

| Zulauf 1A | |
|---|---|
| homogene Mischung aus | |
| 671 g | entionisiertes Wasser |
| 12 g | einer 15 gew.-%igen wässrigen Natriumdodecylsulfat-Lösung |
| 72 g | Acrylsäure |
| 9 g | Itaconsäure |
| | |

| Zulauf 1B | |
|---|---|
| homogene Mischung aus | |
| 1026 g | Styrol |
| 21 g | tertiär-Dodecylmercaptan |
| 693 g | Butadien |
| | |

| Zulauf 2 | |
|---|---|
| 360 g | einer 3,5 gew.-%igen wässrigen Natriumpersulfat-Lösung |

Die erhaltene wässrige Dispersion (D3) wies einen Feststoffgehalt von 52 Gew.-%, bezogen auf das Gesamtgewicht der wässrigen Dispersion, auf und enthielt 21 ppm Koagulat. Die Glasübergangstemperatur wurde zu 10 °C und die Teilchengröße zu 127 nm bestimmt.

### Beispiel 4

In einem 6 L Druckreaktor, ausgerüstet mit einem MIG-Rührer und 3 Dosiereinrichtungen, wurden bei Raumtemperatur und unter Stickstoffatmosphäre 710 g entionisiertes Wasser, 42 g einer 33 gew.-%igen wässrigen Polystyrolsaat (Partikelgröße 30 nm, mit 16 Gewichtsteilen Emulgator Disponil® LDPS 20 der Fa. Cognis), und 806 g einer 67 gew.-%igen Maltodextrin (Roclys C1967S, Roquette). Anschließend wurde der Reaktorinhalt unter Rühren (180 Upm) auf 90 °C aufgeheizt, und bei Erreichen von 85 °C wurden 77 g einer 7 gew.-%igen wässrigen Natriumpersulfat-Lösung zugegeben. Nach 10 Minuten wurden zeitgleich beginnend die Gesamtmenge an Zulauf 1A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 gew.-%igen NaOH auf einen pH-Wert von 6,5 ein und entspannte den Druckbehälter auf Atmosphärendruck.

| Zulauf 1A | |
|---|---|
| homogene Mischung aus | |
| 710 g | entionisiertes Wasser |
| 12 g | einer 15 gew.-%igen wässrigen Natriumdodecylsulfat-Lösung |
| 72 g | Acrylsäure |
| 9 g | Itaconsäure |
| | |

| Zulauf 1B | |
|---|---|
| homogene Mischung aus | |
| 1026 g | Styrol |
| 22 g | tertiär-Dodecylmercaptan |
| 693 g | Butadien |
| | |

| Zulauf 2 | |
|---|---|
| 360 g | einer 3,5 gew.-%igen wässrigen Natriumpersulfat-Lösung |

Die erhaltene wässrige Dispersion (D4) wies einen Feststoffgehalt von 50 Gew.-%, bezogen auf das Gesamtgewicht der wässrigen Dispersion, auf und enthielt 10 ppm Koagulat. Die Glasübergangstemperatur wurde zu 9 °C und die Teilchengröße zu 145 nm bestimmt.

### Beispiel 5

In einem 6 L Druckreaktor, ausgerüstet mit einem MIG-Rührer und 3 Dosiereinrichtungen, wurden bei Raumtemperatur und unter Stickstoffatmosphäre 643 g entionisiertes Wasser, 537 g der abgebauten Stärke A und jeweils 5 Gew.-% der Zuläufe 1A und 1 B vorgelegt. Anschließend wurde der Reaktorinhalt unter Rühren (180 Upm) auf 90 °C aufgeheizt, und bei Erreichen von 85 °C wurden 129 g einer 7 gew.-%igen wässrigen Natriumpersulfat-Lösung zugegeben. Nach 10 Minuten wurden zeitgleich beginnend die restliche Menge (jeweils 95%) an Zulauf 1 A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 gew.-%igen wässrige NaOH auf einen pH-Wert von 6,5 ein und entspannte den Druckbehälter auf Atmosphärendruck.

| Zulauf 1A | |
|---|---|
| homogene Mischung aus | |
| 642 g | entionisiertes Wasser |
| 12 g | einer 15 gew.-%igen wässrigen Natriumdodecylsulfat-Lösung |
| 72 g | Acrylsäure |
| 9 g | Itaconsäure |
| | |

| Zulauf 1B | |
|---|---|
| homogene Mischung aus | |
| 1026 g | Styrol |
| 22 g | tertiär-Dodecylmercaptan |
| 693 g | Butadien |
| | |

| Zulauf 2 | |
|---|---|
| 360 g | einer 3,5 gew.-%igen wässrigen Natriumpersulfat-Lösung |

Die erhaltene wässrige Dispersion (D5) wies einen Feststoffgehalt von 51 Gew.-%, bezogen auf das Gesamtgewicht der wässrigen Dispersion, auf und enthielt 8 ppm Koagulat. Die Glasübergangstemperatur wurde zu 10 °C und die Teilchengröße zu 137 nm bestimmt.

Vergleichsbeispiel 1 analog Beispiel 6 der WO-A-99/09251
- Abgebaute Stärke B:: Hydroxyethylstärke, abgebaut gemäß den Angaben in WO 99/09251, Feststoffgehalt: 38,2 Gew-%.

### Polymerisation

In einem 6 L Druckreaktor, ausgerüstet mit einem MIG-Rührer und 3 Dosiereinrichtungen, wurden bei Raumtemperatur und unter Stickstoffatmosphäre 2030g der abgebauten Stärke B vorgelegt. Anschließend wurde der Reaktorinhalt unter Rühren (180 Upm) auf 90 °C aufgeheizt. Bei Erreichen einer Temperatur von ca. 90 °C wurden 5 g einer 3,5 gew.-%igen wässrigen Natriumpersulfat-Lösung zugegeben. Nach 5 Minuten wurden zeitgleich beginnend Zulauf 1 und Zulauf 2 innerhalb von 480 Minuten kontinuierlich mit gleichbleibenden Mengenströmen zudosiert. Über die gesamte Dosierzeit wurden die Mengenströme kurz vor dem Eintritt in den Reaktor homogenisiert. Daran anschließend ließ man den Reaktorinhalt noch 1 Stunde bei 90 °C nachreagieren. Danach kühlte man den Reaktorinhalt auf Raumtemperatur ab, stellte mit einer 15 gew.-%igen wässrigen NaOH auf einen pH-Wert von 6,2 ein und entspannte den Druckbehälter auf Atmosphärendruck.

| Zulauf 1 | |
|---|---|
| homogene Mischung aus | |
| 484 g | Styrol |
| 342 g | Butadien |
| | |

| Zulauf 2 | |
|---|---|
| 170 g | einer 3,5 gew.-%igen wässrigen Natriumpersulfat-Lösung |

Die erhaltene wässrige Dispersion (VD1) wies einen Feststoffgehalt von 49 Gew.-%, bezogen auf das Gesamtgewicht der wässrigen Dispersion, auf und enthielt 500 ppm Koagulat. Die Glasübergangstemperatur wurde zu 8 °C und die Teilchengröße zu 138 nm bestimmt.

### Beispiel 6

In einem 6 L Druckreaktor, ausgerüstet mit einem MIG-Rührer und 3 Dosiereinrichtungen, wurden bei Raumtemperatur und unter Stickstoffatmosphäre 564 g entionisiertes Wasser und 895 g der abgebauten Stärke A vorgelegt. Anschließend wurde der Reaktorinhalt unter Rühren (180 Upm) auf 90 °C aufgeheizt, und bei Erreichen von 85 °C wurden 143 g einer 7 gew.-%igen wässrigen Natriumpersulfat-Lösung zugegeben. Danach wurden zeitgleich beginnend die Gesamtmenge an Zulauf 1A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1 A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 gew.-%igen NaOH auf einen pH-Wert von 6,5 ein und entspannte den Druckbehälter auf Atmosphärendruck.

| Zulauf 1 A, homogene Mischung aus | |
|---|---|
| 450 g | entionisiertes Wasser |
| 8 g | einer 15 gew.-%igen wässrigen Natriumdodecylsulfat-Lösung |
| 60 g | Acrylsäure |
| 20 g | Itaconsäure |

| Zulauf 1 B, homogene Mischung aus | |
|---|---|
| 1140 g | Styrol |
| 24 g | tertiär-Dodecylmercaptan |
| 780 g | Butadien |
| | |

| Zulauf 2 | |
|---|---|
| 142 g | einer 7 gew.-%igen wässrigen Natriumpersulfat-Lösung |

Die erhaltene wässrige Dispersion (D6) wies einen Feststoffgehalt von 60 Gew.-%, bezogen auf das Gesamtgewicht der wässrigen Dispersion, auf und enthielt 18 ppm Koagulat. Die Glasübergangstemperatur wurde zu 6 °C und die Teilchengröße zu 140 nm bestimmt.

### Beispiel 7

In einem 6 L Druckreaktor, ausgerüstet mit einem MIG-Rührer und 3 Dosiereinrichtungen, wurden bei Raumtemperatur und unter Stickstoffatmosphäre 643 g entionisiertes Wasser und 761 g der abgebauten Stärke A vorgelegt. Anschließend wurde der Reaktorinhalt unter Rühren (180 Upm) auf 90 °C aufgeheizt, und bei Erreichen von 85 °C wurden 122 g einer 7 gew.-%igen wässrigen Natriumpersulfat-Lösung zugegeben. Danach wurden zeitgleich beginnend die Gesamtmenge an Zulauf 1A und Zulauf 1 B innerhalb von 360 Minuten und Zulauf 2 innerhalb von 390 Minuten kontinuierlich mit gleich bleibenden Mengenströmen zudosiert. Über die gesamte Dosierzeit wurden die Mengenströme von Zulauf 1 A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 gew.-%igen NaOH auf einen pH-Wert von 6,5 ein und entspannte den Druckbehälter auf Atmosphärendruck.

| Zulauf 1A | |
|---|---|
| homogene Mischung aus | |
| 976 g | entionisiertes Wasser |
| 51 g | Acrylsäure |
| 17 g | Itaconsäure |

| Zulauf 1B | |
|---|---|
| homogene Mischung aus | |
| 969 g | Styrol |
| 15 g | tertiär-Dodecylmercaptan |
| 663 g | Butadien |
| | |

| Zulauf 2 | |
|---|---|
| 122 g | einer 7 gew.-%igen wässrigen Natriumpersulfat-Lösung |

Die erhaltene wässrige Dispersion (D7) wies einen Feststoffgehalt von 50 Gew.-%, bezogen auf das Gesamtgewicht der wässrigen Dispersion, auf und enthielt 7 ppm Koagulat. Die Glasübergangstemperatur wurde zu 7 °C und die Teilchengröße zu 138 nm bestimmt.

Die gemäß den Beispielen 1 bis 7 und dem Vergleichsbeispiel 1 hergestellten wässrigen Polymerdispersionen wurden als Bindemittel für Papierstreichmassen verwendet.

### Herstellung der Papierstreichmassen:

### Streichfarbenzubereitung

Die Zubereitung der Streichfarbe erfolgte in einem Rühraggregat (Deliteur), in das die einzelnen Komponenten nacheinander zugeführt wurden. Die Pigmente wurden in vordispergierter Form (slurry) zugegeben.

Die anderen Komponenten wurden nach den Pigmenten zugegeben, wobei die Reihenfolge der Reihenfolge im angegebenen Streichfarbenrezept entspricht.

Die Einstellung des Endfeststoffgehalts erfolgte durch die Zugabe von Wasser.

### Streichen auf der Pilotanlage

Die vorstehend beschriebenen Streichfarben wurden auf der Pilotstreichanlage der BASF auf ein ungestrichenes holzfreies Rohpapier aufgetragen. Folgende Versuchsparameter wurden gewählt:

| | |
|---|---|
| Streichfarbenrezept: | 70 Teile feinteiliges Carbonat |
| | 30 Teile feinteiliges Clay |
| | 10 Teile Streichfarbenbinder |
| | 0,5 Teile Rheologiehilfsmittel (CMC) |
| Streichfarbendaten: | Feststoffgehalt 66% |
| | |
| | Viskosität low shear (Brookfield RVT, Spindel 4, 100 Upm) |
| | 1200 - 1500 mPas |
| | |
| | Viskosität high shear |
| | (Thermo-Haake RS 600) |
| siehe Tabelle | |
| | |
| Auftragsverfahren: | Bladestreichverfahren |
| | |
| Bestimmung des Anpressdrucks des Blades über den Anpressweg in mm siehe Tabelle | |
| | |
| Rohpapier: | holzfrei, 70 g/m² |
| | |
| Auftragsmenge: | beidseitig je 10 g/m² |
| | |
| Trocknung: | mittels Heißluft und IR-Strahlern auf 4,5 % Restfeuchtigkeit |

Die gestrichenen Papiere wurden anschließend kalandriert (90°C, 300 m/min, 200 kn/m Liniendruck) und für einen nachfolgenden Bogenoffsetdruckversuch auf das passende Druckmaschinenformat geschnitten.

### Bestimmung der Anzahl der Rupfpartikel (Partikel/cm²)

Die Papiere wurden auf einer 4-Farben-Bogenoffsetdruckmaschine mit einem speziellen Testdruckaufbau verdruckt (KCL pick print test). Als Maß für die Offsetfestigkeit der Papiere wird dabei die Anzahl der aus der Papieroberfläche herausgerupften und auf einem Gummituch abgelagerten Partikel herangezogen. Die Partikel werden visuell ausgezählt. Je geringer die Anzahl der Partikel, desto besser ist das Papier für den Offsetdruck geeignet.

### Offsettest (Labortest)

Aus den zu prüfenden Papieren wurden Proben mit einer Größe von 240 x 46 mm in der Längsrichtung ausgeschnitten. Auf die Einfärbewalze wurde eine entsprechende Menge der Druckfarbe gegeben und 1 Minute laufen gelassen. Dann wurde eine Druckscheibe eingesetzt und 30 s eingefärbt.

Die Druckgeschwindigkeit betrug 1 m/s. Ein Papierstreifen wurde auf einen Druckprobeträger mit dem bedruckten Papierstreifen erneut in die Ausgangsstellung gebracht. Nach einer festgelegten Zeitspanne wurde der Druckvorgang ohne Austausch der Druckscheibe erneut gestartet. Dieser Vorgang wurde mehrmals wiederholt.

Nach jedem Druckgang wurde das Rupfen auf der bedruckten Seite des Papierstreifens visuell begutachtet. In der Tabelle ist die Anzahl der Durchgänge angegeben bis zum ersten Mal ein Rupfen auftrat. Je höher die Anzahl der Durchgänge bis zum Auftreten des Rupfens, desto besser ist die Eignung der Papiere für den Offsetdruck. Bestimmung der Viskosität von Papierstreichmassen bei hoher Scherung

Die Viskosität der Papierstreichmassen wurde in einem Haake-Viskosimeter bei einem Schergefälle von 100 000/s und einer Temperatur von 23°C °C gemessen. Die Angabe der Viskosität erfolgt in mPa.s.

In der Tabelle ist die Viskosität der Papierstreichmassen bei hoher Scherung, der Rakeldruck der Pilotmaschine in mm Anpressweg und die Bindekraft angegeben, die mit Hilfe der Offsettdurchgänge und der Anzahl der Rupfpartikel/cm² charakterisiert wurde. Tabelle

| Dispersion | Viskosität bei hoher Scherung [mPa.s] | Rakeldruck in mm Anpressweg | Offsettdurchgänge | Druckmaschine Partikel/cm² |
|---|---|---|---|---|
| D1 | 26 | 7 | 5 | 4 |
| D2 | 24 | 7 | 5 | 8 |
| D3 | 25 | 6,8 | 5 | 10 |
| D4 | 25 | 7 | 5 | 7 |
| D5 | 25 | 6,7 | 5 | 7 |
| D6 | 26 | 7 | 5 | 6 |
| D7 | 25 | 6,9 | 5 | 4 |
| VD1 | Nicht messbar | 7 | 1 | 2000 |

## Patentansprüche

1. Wässrige Polymerdispersionen auf Basis von Copolymerisaten aus Vinylaromaten und konjugierten aliphatischen Dienen, **dadurch gekennzeichnet, dass** sie eine mittlere Teilchengröße von 80 bis 150 nm aufweisen und erhältlich sind durch radikalisch initiierte Emulsionscopolymerisation von
(a) 19,9 bis 80 Gew.-Teilen mindestens einer vinylaromatischen Verbindung,
(b) 19,9 bis 80 Gew.-Teilen mindestens eines konjugierten aliphatischen Diens,
(c) 0,1 bis 10 Gew.-Teilen mindestens einer ethylenisch ungesättigten Säure und
(d) 0 bis 20 Gew.-Teilen mindestens eines anderen monoethylenisch ungesättigten Monomeren,
wobei die Summe der Gew.-Teile der Monomeren (a), (b). (c) und (d) immer 100 beträgt,
in wässrigem Medium in Gegenwart mindestens einer abgebauten Stärke mit einer intrinsischen Viskosität ηᵢ von weniger als 0,07 dl/g unter Verwendung von mindestens 0,9 Gew.-%, bezogen auf die insgesamt eingesetzten Monomeren, an Initiatoren ausgewählt unter Peroxodisulfaten, Peroxosulfaten, Azoinitiatoren, organischen Peroxiden, organischen Hydroperoxiden und Wasserstoffperoxid, wobei mindestens 30 Gew.-% der Initiatoren zusammen mit der abgebauten Stärke in dem wässrigen Medium vorgelegt und die Monomeren sowie die restlichen Initiatoren unter Polymerisationsbedingungen in diese Vorlage dosiert werden.

2. Wässrige Polymerdispersionen nach Anspruch 1, **dadurch gekennzeichnet, dass** sie erhältlich sind durch radikalisch initiierte Emulsionscopolymerisation, wobei 3 bis 10 Gew.-% der insgesamt zu polymerisierenden Monomeren in dem wässrigen Medium vorgelegt werden.

3. Wässrige Polymerdispersionen nach Anspruch 1 oder 2, **dadurch gekennzeichnet, dass** bei der Emulsionscopolymerisation eine abgebaute native Stärke mit einer intrinsischen Viskosität ηᵢ von 0,02 bis 0,06 dl/g eingesetzt wird.

4. Wässrige Polymerdispersionen nach einem der Ansprüche 1 bis 3, **dadurch gekennzeichnet, dass** bei der Emulsionscopolymerisation
(a) 19,9 bis 80 Gew.-Teile Styrol und/oder Methylstyrol,
(b) 19,9 bis 80 Gew.-Teile Butadien-1,3 und/oder Isopren,
(c) 0,1 bis 10 Gew.-Teile mindestens einer ethylenisch ungesättigten Säure und
(d) 0 bis 20 Gew.-Teilen mindestens eines anderen monoethylenisch ungesättigten Monomeren,
wobei die Summe der Gew.-Teile der Monomeren (a), (b), (c) und (d) immer 100 beträgt,
eingesetzt werden.

5. Wässrige Polymerdispersionen nach einem der Ansprüche 1 bis 3, **dadurch gekennzeichnet, dass** bei der Emulsionscopolymerisation
(a) 25 bis 70 Gew.-Teile Styrol und/oder Methylstyrol,
(b) 25 bis 70 Gew.-Teile Butadien-1,3 und/oder Isopren,
(c) 0,1 bis 10 Gew.-Teile mindestens einer ethylenisch ungesättigten Säure und
(d) 0 bis 20 Gew.-Teilen mindestens eines anderen monoethylenisch ungesättigten Monomeren,
wobei die Summe der Gew.-Teile der Monomeren (a), (b), (c) und (d) immer 100 beträgt,
eingesetzt werden.

6. Wässrige Polymerdispersionen nach einem der Ansprüche 1 bis 5, **dadurch gekennzeichnet, dass** bei der Emulsionscopolymerisation 15 bis 60 Gew.-Teile einer abgebauten Stärke auf 100 Gew.-Teile der Monomeren eingesetzt werden.

7. Wässrige Polymerdispersionen nach einem der Ansprüche 1 bis 6, **dadurch gekennzeichnet, dass** der Feststoffgehalt größer 55 Gew.% beträgt.

8. Wässrige Polymerdispersionen nach einem der Ansprüche 1 bis 7, **dadurch gekennzeichnet, dass** die Emulsionscopolymerisation emulgatorfrei und/oder ohne Verwendung von Polymersaat erfolgt.

9. Verfahren zur Herstellung von wässrigen Polymerdispersionen auf Basis von Copolymerisaten aus Vinylaromaten und konjugierten aliphatischen Dienen durch Copolymerisation der Monomeren in wässrigern Medium in Gegenwart einer abgebauten Stärke und von Radikale bildenden Initiatoren, **dadurch gekennzeichnet, dass** man bei der radikalisch initiierten Emulsionscopolymerisation
(a) 19,9 bis 80 Gew.-Teilen mindestens einer vinylaromatischen Verbindung,
(b) 19,9 bis 80 Gew.-Teilen mindestens eines konjugierten aliphatischen Diens,
(c) 0,1 bis 10 Gew.-Teilen mindestens einer ethylenisch ungesättigten Säure und
(d) 0 bis 20 Gew.-Teilen mindestens eines anderen monoethylenisch ungesättigten Monomeren,
wobei die Summe der Gew.-Teile der Monomeren (a), (b), (c) und (d) immer 100 beträgt,
einsetzt, eine abgebaute Stärke mit einer intrinsischen Viskosität ηᵢ von weniger als 0,07 dl/g verwendet und mindestens 0,9 Gew.-%, bezogen auf die insgesamt eingesetzten Monomeren, an Initiatoren ausgewählt unter Peroxodisulfaten, Peroxosulfaten, Azoinitiatoren, organischen Peroxiden, organischen Hydroperoxiden und Wasserstoffperoxid einsetzt, wobei mindestens 30 Gew.-% der Initiatoren zusammen mit der abgebauten Stärke in dem wässrigen Medium vorgelegt und die Monomeren sowie die restlichen Initiatoren unter Polymerisationsbedingungen in diese Vorlage dosiert werden.

10. Verfahren nach Anspruch 9, **dadurch gekennzeichnet, dass** man 3 bis 10 Gew.-% der insgesamt zu polymerisierenden Monomeren in dem wässrigen Medium vorlegt.

11. Verfahren nach Anspruch 9 oder 10, **dadurch gekennzeichnet, dass** man bei der Emulsionscopolymerisation eine abgebaute native Stärke mit einer intrinsischen Viskosität ηᵢ von 0,02 bis 0,06 dl/g einsetzt.

12. Verfahren nach einem der Ansprüche 9 bis 11, **dadurch gekennzeichnet, dass** man bei der Emulsionscopolymerisation
(a) 19,9 bis 80 Gew.-Teile Styrol und/oder Methylstyrol,
(b) 19,9 bis 80 Gew.-Teile Butadien-1,3 und/oder Isopren.
(c) 0,1 bis 10 Gew.-Teile mindestens einer ethylenisch ungesättigten Säure und
(d) 0 bis 20 Gew.-Teilen mindestens eines anderen monoethylenisch ungesättigten Monomeren,
wobei die Summe der Gew.-Teile der Monomeren (a), (b), (c) und (d) immer 100 beträgt,
einsetzt.

13. Verfahren nach einem der Ansprüche 9 bis 12, **dadurch gekennzeichnet, dass** man bei der Emulsionscopolymerisation
(a) 25 bis 70 Gew.-Teile Styrol und/oder Methylstyrol,
(b) 25 bis 70 Gew.-Teile Butadien-1,3 und/oder Isopren,
(c) 0,1 bis 10 Gew.-Teile mindestens einer ethylenisch ungesättigten Säure und
(d) 0 bis 20 Gew.-Teilen mindestens eines anderen monoethylenisch ungesättigten Monomeren,
wobei die Summe der Gew.-Teile der Monomeren (a), (b), (c) und (d) immer 100 beträgt,
einsetzt.

14. Verfahren nach einem der Ansprüche 9 bis 13, **dadurch gekennzeichnet, dass** man bei der Emulsionscopolymerisation als Komponente (c) der Monomermischungen Acrylsäure, Methacrylsäure, Itaconsäure, Maleinsäure, Crotonsäure, Vinylsulfonsäure, Acrylamidomethylpropansulfonsäure, Vinylphosphonsäure, Alkali- oder Ammoniumsalze dieser Säuren sowie Mischungen der Säuren und/oder Salze einsetzt.

15. Verfahren nach einem der Ansprüche 9 bis 14, **dadurch gekennzeichnet, dass** man bei der Emulsionscopolymerisation 15 bis 60 Gew.-Teile einer abgebauten Stärke auf 100 Gew.-Teile der Monomeren einsetzt.

16. Verfahren nach einem der Ansprüche 9 bis 15, **dadurch gekennzeichnet, dass** man als Initiator Natriumpersulfat, Kaliumpersulfat, Ammoniumpersulfat, Natriumperoxodisulfat, Kaliumperoxodisulfat und/oder Ammoniumperoxodisulfat einsetzt.

17. Verfahren nach einem der Ansprüche 9 bis 16, **dadurch gekennzeichnet, dass** die Emulsionscopolymerisation emulgatorfrei und/oder ohne Verwendung von Polymersaat erfolgt.

18. Verwendung der wässrigen Polymerdispersionen nach einem der Ansprüche 1 bis 8 als Bindemittel, Klebstoff, Schlichtemittel für Fasern oder zur Herstellung von Überzügen.

19. Verwendung der wässrigen Polymerdispersionen nach Anspruch 18 als Binde, mittel in Papierstreichmassen.

20. Papierstreichmasse, enthaltend mindestens ein Pigment, das in Wasser dispergiert ist und eine wässrige Polymerdispersion nach einem der Ansprüche 1 bis 8 als Bindemittel.

## Claims

1. An aqueous polymer dispersion based on copolymers of vinyl aromatics and conjugated aliphatic dienes, wherein said polymer dispersion has a mean particle size of from 80 to 150 nm and is obtainable by free radical emulsion copolymerization of
(a)from 19.9 to 80 parts by weight of at least one vinyl aromatic compound,
(b)from 19.9 to 80 parts by weight of at least one conjugated aliphatic diene,
(c) from 0.1 to 10 parts by weight of at least one ethylenically unsaturated acid and
(d)from 0 to 20 parts by weight of at least one other monoethylenically unsaturated monomer,
the sum of the parts by weight of the monomers (a), (b), (c) and (d) always being 100,
in an aqueous medium in the presence of at least one degraded starch having an intrinsic viscosity ηᵢ of less than 0.07 dl/g with the use of at least 0.9% by weight, based on the monomers used altogether, of initiators selected from peroxodisulfates, peroxosulfates, azo initiators, organic peroxides, organic hydroperoxides and hydrogen peroxide, at least 30% by weight of the initiators being initially taken together with the degraded starch in the aqueous medium and the monomers and the remaining initiators being metered into this initially taken mixture under polymerization conditions.

2. The aqueous polymer dispersion according to claim 1, which is obtainable by free radical emulsion copolymerization, from 3 to 10% by weight of the monomers to be polymerized altogether being initially taken in the aqueous medium.

3. The aqueous polymer dispersion according to claim 1 or 2, wherein a degraded native starch having an intrinsic viscosity ηᵢ of from 0.02 to 0.06 dl/g is used in the emulsion copolymerization.

4. The aqueous polymer dispersion according to any of claims 1 to 3, wherein
(a)from 19.9 to 80 parts by weight of styrene and/or methylstyrene,
(b)from 19.9 to 80 parts by weight of 1,3-butadiene and/or isoprene,
(c) from 0.1 to 10 parts by weight of at least one ethylenically unsaturated acid and
(d)from 0 to 20 parts by weight of at least one other monoethylenically unsaturated monomer,
the sum of the parts by weight of monomers (a), (b), (c) and (d) always being 100,
are used in the emulsion copolymerization.

5. The aqueous polymer dispersion according to any of claims 1 to 3, wherein
(a)from 25 to 70 parts by weight of styrene and/or methylstyrene,
(b) from 25 to 70 parts by weight of 1,3-butadiene and/or isoprene,
(c) from 0.1 to 10 parts by weight of at least one ethylenically unsaturated acid and
(d)from 0 to 20 parts by weight of at least one other monoethylenically unsaturated monomer,
the sum of the parts by weight of the monomers (a), (b), (c) and (d) always being 100,
are used in the emulsion copolymerization.

6. The aqueous polymer dispersion according to any of claims 1 to 5, wherein from 15 to 60 parts by weight of a degraded starch are used per 100 parts by weight of the monomers in the emulsion copolymerization.

7. The aqueous polymer dispersion according to any of claims 1 to 6, wherein the solids content is greater than 55% by weight.

8. The aqueous polymer dispersion according to any of claims 1 to 7, wherein the emulsion copolymerization is effected in the absence of an emulsifier and/or without use of polymer seed.

9. A process for the preparation of aqueous polymer dispersions based on copolymers of vinyl aromatics and conjugated aliphatic dienes by copolymerization of the monomers in an aqueous medium in the presence of a degraded starch and of free radical initiators, wherein
(a)from 19.9 to 80 parts by weight of at least one vinyl aromatic compound,
(b)from 19.9 to 80 parts by weight of at least one conjugated aliphatic diene,
(c) from 0.1 to 10 parts by weight of at least one ethylenically unsaturated acid and
(d)from 0 to 20 parts by weight of at least one other monoethylenically unsaturated monomer,
the sum of the parts by weight of the monomers (a), (b), (c) and (d) always being 100,
are used in the free radical emulsion copolymerization, a degraded starch having an intrinsic viscosity ηᵢ of less than 0.07 dl/g is used and at least 0.9% by weight, based on the monomers used altogether, of initiators selected from peroxodisulfates, peroxosulfates, azo initiators, organic peroxides, organic hydroperoxides and hydrogen peroxide is used, at least 30% by weight of the initiators initially being taken together with the degraded starch in the aqueous medium and the monomers and the remaining initiators being metered into this initially taken mixture under polymerization conditions.

10. The process according to claim 9, wherein from 3 to 10% by weight of the monomers to be polymerized altogether are initially taken in the aqueous medium.

11. The process according to claim 9 or 10, wherein a degraded native starch having an intrinsic viscosity ηᵢ of from 0.02 to 0.06 dl/g is used in the emulsion copolymerization.

12. The process according to any of claims 9 to 11,
wherein
(a) from 19.9 to 80 parts by weight of styrene and/or methylstyrene,
(b) from 19.9 to 80 parts by weight of 1,3-butadiene and/or isoprene,
(c) from 0.1 to 10 parts by weight of at least one ethylenically unsaturated acid and
(d) from 0 to 20 parts by weight of at least one other monoethylenically unsaturated monomer,
the sum of the parts by weight of the monomers (a), (b), (c) and (d) always being 100,
are used in the emulsion copolymerization.

13. The process according to any of claims 9 to 12,
wherein
(a) from 25 to 70 parts by weight of styrene and/or methylstyrene,
(b) from 25 to 70 parts by weight of 1,3-butadiene and/or isoprene,
(c) from 0.1 to 10 parts by weight of at least one ethylenically unsaturated acid and
(d) from 0 to 20 parts by weight of at least one other monoethylenically unsaturated monomer,
the sum of the parts by weight of the monomers (a), (b), (c) and (d) always being 100,
are used in the emulsion copolymerization.

14. The process according to any of claims 9 to 13, wherein acrylic acid, methacrylic acid, itaconic acid, maleic acid, crotonic acid, vinylsulfonic acid, acrylamidomethylpropanesulfonic acid, vinylphosphonic acid, alkali metal or ammonium salts of these acids and mixtures of the acids and/or salts are used as component (c) in the monomer mixtures in the emulsion copolymerization.

15. The process according to any of claims 9 to 14, wherein from 15 to 60 parts by weight of a degraded starch are used per 100 parts by weight of the monomers in the emulsion copolymerization.

16. The process according to any of claims 9 to 15, wherein sodium persulfate, potassium persulfate, ammonium persulfate, sodium peroxodisulfate, potassium peroxodisulfate and/or ammonium peroxodisulfate is used as initiator.

17. The process according to any of claims 9 to 16, wherein the emulsion copolymerization is effected in the absence of an emulsifier and/or without use of polymer seed.

18. The use of an aqueous polymer dispersion according to any of claims 1 to 8 as a binder, adhesive, size for fibers or for the production of coverings.

19. The use of an aqueous polymer dispersion according to claim 18 as a binder in paper coating slips.

20. A paper coating slip comprising at least one pigment, which is dispersed in water, and an aqueous polymer dispersion according to any of claims 1 to 8 as a binder.

## Revendications

1. Dispersions aqueuses de polymères à base de copolymérisats de composés vinylaromatiques et de diènes aliphatiques conjugués, **caractérisées en ce qu'**elles présentent une taille moyenne de particule de 80 à 150 nm et peuvent être obtenues par copolymérisation en émulsion à amorçage radicalaire de
(a) 19,9 à 80 parties en poids d'au moins un composé vinylaromatique,
(b) 19,9 à 80 parties en poids d'au moins un diène aliphatique conjugué,
(c) 0,1 à 10 parties en poids d'au moins un acide à insaturation éthylénique et
(d) 0 à 20 parties en poids d'au moins un autre monomère à insaturation monoéthylénique,
la somme des parties en poids des monomères (a), (b), (c) et (d) étant toujours égale à 100,
en milieu aqueux, en présence d'au moins un amidon dégradé ayant une viscosité intrinsèque ηᵢ de moins de 0,07 dl/g, avec utilisation d'au moins 0,9 % en poids, par rapport aux monomères utilisés au total, d'amorceurs choisis parmi des peroxodisulfates, peroxosulfates, amorceurs azo, peroxydes organiques, hydroperoxydes organiques et le peroxyde d'hydrogène, au moins 30 % en poids des amorceurs étant disposés au préalable, conjointement avec l'amidon dégradé, dans le milieu aqueux, et les monomères ainsi que les amorceurs restants étant introduits par addition dosée dans cette charge disposée au préalable, dans des conditions de polymérisation.

2. Dispersions aqueuses de polymères selon la revendication 1, **caractérisées en ce qu'**elles peuvent être obtenues par copolymérisation en émulsion à amorçage radicalaire, 3 à 10 % en poids des monomères à polymériser au total étant disposés au préalable dans le milieu aqueux.

3. Dispersions aqueuses de polymères selon la revendication 1 ou 2, **caractérisées en ce que** dans la copolymérisation en émulsion on utilise un amidon natif dégradé ayant une viscosité intrinsèque ηᵢ de 0,02 à 0,06 dl/g.

4. Dispersions aqueuses de polymères selon l'une quelconque des revendications 1 à 3, **caractérisées en ce que** dans la copolymérisation en émulsion on utilise
(a) de 19,9 à 80 parties en poids de styrène et/ou de méthylstyrène,
(b) de 19,9 à 80 parties en poids de butadiène-1,3 et/ou d'isoprène,
(c) de 0,1 à 10 parties en poids d'au moins un acide à insaturation éthylénique et
(d) de 0 à 20 parties en poids d'au moins un autre monomère à insaturation monoéthylénique,
la somme des parties en poids des monomères (a), (b), (c) et (d) étant toujours égale à 100.

5. Dispersions aqueuses de polymères selon l'une quelconque des revendications 1 à 3, **caractérisées en ce que** dans la copolymérisation en émulsion on utilise
(a) de 25 à 70 parties en poids de styrène et/ou de méthylstyrène,
(b) de 25 à 70 parties en poids de butadiène-1,3 et/ou d'isoprène,
(c) de 0,1 à 10 parties en poids d'au moins un acide à insaturation éthylénique et
(d) de 0 à 20 parties en poids d'au moins un autre monomère à insaturation monoéthylénique,
la somme des parties en poids des monomères (a), (b), (c) et (d) étant toujours égale à 100.

6. Dispersions aqueuses de polymères selon l'une quelconque des revendications 1 à 5, **caractérisées en ce que** dans la copolymérisation en émulsion on utilise de 15 à 60 parties en poids d'un amidon dégradé pour 100 parties en poids des monomères.

7. Dispersions aqueuses de polymères selon l'une quelconque des revendications 1 à 6, **caractérisées en ce que** la teneur en matière solide est supérieure à 55 % en poids.

8. Dispersions aqueuses de polymères selon l'une quelconque des revendications 1 à 7, **caractérisées en ce que** la copolymérisation en émulsion s'effectue en l'absence d'émulsifiant et/ou sans utilisation d'ensemencement avec un polymère.

9. Procédé pour la préparation de dispersions aqueuses de polymères à base de copolymérisats de composés vinylaromatiques et de diènes aliphatiques conjugués, par copolymérisation des monomères en milieu aqueux en présence d'un amidon dégradé et d'amorceurs générateurs de radicaux, **caractérisé en ce que** dans la copolymérisation en émulsion à amorçage radicalaire on utilise
(a) 19,9 à 80 parties en poids d'au moins un composé vinylaromatique,
(b) 19,9 à 80 parties en poids d'au moins un diène aliphatique conjugué,
(c) 0,1 à 10 parties en poids d'au moins- un acide à insaturation éthylénique et
(d) 0 à 20 parties en poids d'au moins un autre monomère à insaturation monoéthylénique,
la somme des parties en poids des monomères (a), (b), (c) et (d) étant toujours égale à 100,
on utilise un amidon dégradé ayant une viscosité intrinsèque ηᵢ de moins de 0,07 dl/g et au moins 0,9 % en poids, par rapport aux monomères utilisés au total, d'amorceurs choisis parmi des peroxodisulfates, peroxosulfates, amorceurs azo, peroxydes organiques, hydroperoxydes organiques et le peroxyde d'hydrogène, au moins 30 % en poids des amorceurs étant disposés au préalable, conjointement avec l'amidon dégradé, dans le milieu aqueux, et les monomères ainsi que les amorceurs restants étant introduits par addition dosée dans cette charge disposée au préalable, dans des conditions de polymérisation.

10. Procédé selon la revendication 9, **caractérisé en ce qu'**on dispose au préalable dans le milieu aqueux 3 à 10 % en poids des monomères à polymériser au total.

11. Procédé selon la revendication 9 ou 10, **caractérisé en ce que** dans la copolymérisation en émulsion on utilise un amidon natif dégradé ayant une viscosité intrinsèque ηᵢ de 0,02 à 0,06 dl/g.

12. Procédé selon l'une quelconque des revendications 9 à 11, **caractérisé en ce que** dans la copolymérisation en émulsion on utilise
(a) 19,9 à 80 parties en poids de styrène ou de méthylstyrène,
(b) 19,9 à 80 parties en poids de butadiène-1,3 et/ou d'isoprène,
(c) 0,1 à 10 parties en poids d'au moins un acide à insaturation éthylénique et
(d) 0 à 20 parties en poids d'au moins un autre monomère à insaturation monoéthylénique,
la somme des parties en poids des monomères (a), (b), (c) et (d) étant toujours égale à 100.

13. Procédé selon l'une quelconque des revendications 9 à 12, **caractérisé en ce que** dans la copolymérisation en émulsion on utilise
(a) 25 à 70 parties en poids de styrène ou de méthylstyrène,
(b) 25 à 70 parties en poids de butadiène-1,3 et/ou d'isoprène,
(c) 0,1 à 10 parties en poids d'au moins un acide à insaturation éthylénique et
(d) 0 à 20 parties en poids d'au moins un autre monomère à insaturation monoéthylénique,
la somme des parties en poids des monomères (a), (b), (c) et (d) étant toujours égale à 100.

14. Procédé selon l'une quelconque des revendications 9 à 13, **caractérisé en ce que** dans la copolymérisation en émulsion on utilise comme composant (c) des mélanges de monomères l'acide acrylique, l'acide méthacrylique, l'acide itaconique, l'acide maléique, l'acide crotonique, l'acide vinylsulfonique, l'acide acrylamidométhylpropanesulfonique, l'acide vinylphosphonique, des sels de métaux alcalins ou d' ammonium de ces acides ainsi que des mélanges des acides et/ou sels.

15. Procédé selon l'une quelconque des revendications 9 à 14, **caractérisé en ce que** dans la copolymérisation en émulsion on utilise de 15 à 60 parties en poids d'un amidon dégradé, pour 100 parties en poids des monomères.

16. Procédé selon l'une quelconque des revendications 9 à 15, **caractérisé en ce qu'**on utilise comme amorceur le persulfate de sodium, le persulfate de potassium, le persulfate d'ammonium, le peroxodisulfate de sodium, le peroxodisulfate de potassium et/ou le peroxodisulfate d'ammonium.

17. Procédé selon l'une quelconque des revendications 9 à 16, **caractérisé en ce que** la copolymérisation en émulsion s'effectue en l'absence d'émulsifiant et/ou sans utilisation d'ensemencement avec un polymère.

18. Utilisation des dispersions aqueuses de polymères selon l'une quelconque des revendications 1 à 8, en tant que liant, adhésif, agent d'encollage pour fibres ou dans la production de revêtements.

19. Utilisation des dispersions de polymères selon la revendication 18, en tant que liant dans des sauces de couchage pour papier.

20. Sauce de couchage pour papier, contenant au moins un pigment qui est dispersé dans de l'eau et, en tant que liant, une dispersion aqueuse de polymère selon l'une quelconque des revendications 1 à 8.
